# EUROPÄISCHE PATENTSCHRIFT

(11) **EP 1 573 875 B1**
(45) Veröffentlichungstag und Bekanntmachung des Hinweises auf die Patenterteilung: **10.05.2006**
(21) Anmeldenummer: 03785556.6
(22) Anmeldetag: 05.12.2003
(51) Int. Cl.: H02G 5/00

(54) **ANORDNUNG ZUM STÖRLICHTBOGENSCHUTZ EINER SAMMELSCHIENENANORDNUNG**
ARRANGEMENT FOR PROTECTING A BUS BAR SYSTEM FROM INTERNAL ARCING
DISPOSITIF DE PROTECTION D'UN SYSTEME DE BARRES COLLECTRICES CONTRE LES ARCS ELECTRIQUES PARASITES

(30) Priorität: 20.12.2002 DE 10261838
(43) Veröffentlichungstag der Anmeldung: 14.09.2005
(73) Patentinhaber: SIEMENS AKTIENGESELLSCHAFT, 80333 München (DE)
(72) Erfinder: SORGALLA, Maik, 04159 Leipzig (DE); ZICKMANTEL, Mathias, 04329 Leipzig (DE)
(86) Internationale Anmeldenummer: PCT/DE2003/004090
(87) Internationale Veröffentlichungsnummer: WO 2004/057718

(56) Entgegenhaltungen:
- DE-A- 4 328 241
- DE-B- 1 191 458

## Beschreibung

Die Erfindung betrifft eine Anordnung zum Störlichtbogenschutz einer Sammelschienenanordnung , die zumindest eine erste und eine zweite Sammelschiene aufweist, mit zumindest einer an der ersten Sammelschiene befestigten ersten Störlichtbogen-Elektrode und einer an der zweiten Sammelschiene befestigten zweiten Störlichtbogen-Elektrode, wobei eine erste Kante der ersten Störlichtbogen-Elektrode einer zweiten Kante der zweiten Störlichtbogen-Elektrode derart gegenübersteht, dass bei einem Kurzschluss der ersten und der zweiten Stromschiene der entstehende Lichtbogen zwischen der ersten und der zweiten Kante brennt.

Eine derartige Anordnung zum Störlichtbogenschutz einer Sammelschienenanordnung ist beispielsweise aus der Druckschrift DE-1 191 458 bekannt. - Bei dieser bekannten Anordnung sind die Störlichtbogen-Elektroden als nahezu vollkreisförmige Lichtbogenhörner ausgebildet, um den Lichtbogen zwischen den Störlichtbogen-Elektroden in rotierender Bewegung zu halten und ein Durchlaufen in benachbarte Schaltfelder einer Schaltanlage zu verhindern und den Materialabbrand der Störlichtbogen-Elektroden zu verringern. Insbesondere der unmittelbar an den vollkreisförmige Lichtbogenhörner angrenzende Abschnitt der Sammelschienen unterliegt dabei im wesentlichen dem gleichen Abbrand wie die Lichtbogenhörner.

Ausgehend von einer Anordnung mit den Merkmalen des Oberbegriffes des Anspruches 1 (DE-1 191 458) liegt der Erfindung die Aufgabe zu Grunde, die Anordnung so zu gestalten, dass ein Abbrennen der Sammelschienen weitgehend vermieden wird.

Diese Aufgabe wird gemäß der Erfindung dadurch gelöst, dass die lichte Weite zwischen den Kanten der Störlichtbogen-Elektroden kleiner als die lichte Weite zwischen den Sammelschienen ist. - Bei einer derartigen Ausgestaltung der Anordnung ist sichergestellt, dass der Lichtbogen ausschließlich zwischen den Störlichtbogen-Elektroden brennt.

In einer bevorzugten Ausgestaltung der Erfindung ist vorgesehen, dass in Laufrichtung des Lichtbogens hinter den Störlichtbogen-Elektroden eine Isolierwand angeordnet ist,
wobei die Isolierwand an den Störlichtbogen-Elektroden anliegt. - Durch das anliegen der Isolierwand an den Störlichtbogen-Elektroden kann der Störlichtbogen an der an der Isolierwand anliegenden Seite der Sammelschienen nicht neu zünden und findet somit nur an den gegenüberliegenden Kanten der Störlichtbogen-Elektroden ideale Brennbedingungen.

Um bei einem Störlichtbogen eine ausreichende Standzeit der Störlichtbogen-Elektroden sicherzustellen, ist in einer Weiterbildung der Erfindung vorgesehen, dass die erste Störlichtbogen-Elektrode im Bereich der ersten Kante und die zweiten Störlichtbogen-Elektrode im Bereich der zweiten Kante insbesondere durch Falzen doppellagig ausgebildet sind. - Hierbei können die Störlichtbogen-Elektroden einfach und preiswert aus Blech, beispielsweise aus Metall- oder Stahlblech hergestellt sein.

Zur Führung des Lichtbogens kann vorgesehen werden, dass die erste Störlichtbogen-Elektrode im Bereich der ersten Kante und die zweiten Störlichtbogen-Elektrode im Bereich der zweiten Kante mit einem vorzugsweise senkrecht zu der jeweiligen Kante verlaufenden Leitelement für den Lichtbogen versehen sind. Diese Leitelemente können als Materialkanten ausgebildet sein. Die Materialkanten können beispielsweise Kanten von Schlitzen Nuten, Ausprägungen oder zusätzlich aufgebrachten, vorzugsweise scharfkantigen Elementen sein.

Zur montagefreundlichen Befestigung der Störlichtbogen-Elektroden an den Stromschienen ist in bevorzugter Ausgestaltung vorgesehen, dass jede der Störlichtbogen-Elektroden und jede der Stromschienen, denen sie zugeordnet sind, mit Ausnehmungen zur Befestigung versehen sind. Mit Vorteil sind die Ausnehmungen derart ausgebildet, dass sie die Befestigung der Störlichtbogen-Elektroden an der ersten und der zweiten Sammelschiene bei unterschiedlichen lichten Weiten zwischen den Sammelschienen erlauben.

Die Erfindung wird im Folgenden anhand der in den Figuren 1 bis 10 dargestellten Ausführungsbeispiele näher erläutert. Dabei zeigen:
Figur 1: den oberen Teil eines Gerüstes eines Schaltfeldes einer Schaltanlage mit einer daran angeordneten ersten Ausführungsform der Sammelschienenanordnung, die eine erste lichte Weite zwischen den Sammelschienen aufweist,
Figur 2: den unteren Teil eines gemäß der Figur 1 ausgebildeten Gerüstes mit einer daran angeordneten zweiten Ausführungsform der Sammelschienenanordnung,
Figur 3: einen Sammelschienenhalter,
Figuren 4 und 5: einen Ausschnitt aus der Figur 1,
Figuren 6 und 7: einen Ausschnitt aus der Figur 2,
Figur 8: den oberen Teil eines gemäß der Figuren 1 bzw. 2 ausgebildeten Gerüstes mit einer dritten Ausführungsform der Sammelschienenanordnung, die eine zweite lichte Weite zwischen den Sammelschienen aufweist, und mit einer Anordnung zum Störlichtbogenschutz der Sammelschienenanordnung, und
Figuren 9 und 10: zwei Sammelschienen einer vierten Ausführungsform der Sammelschienenanordnung jeweils mit einer Störlichtbogen-Elektrode.

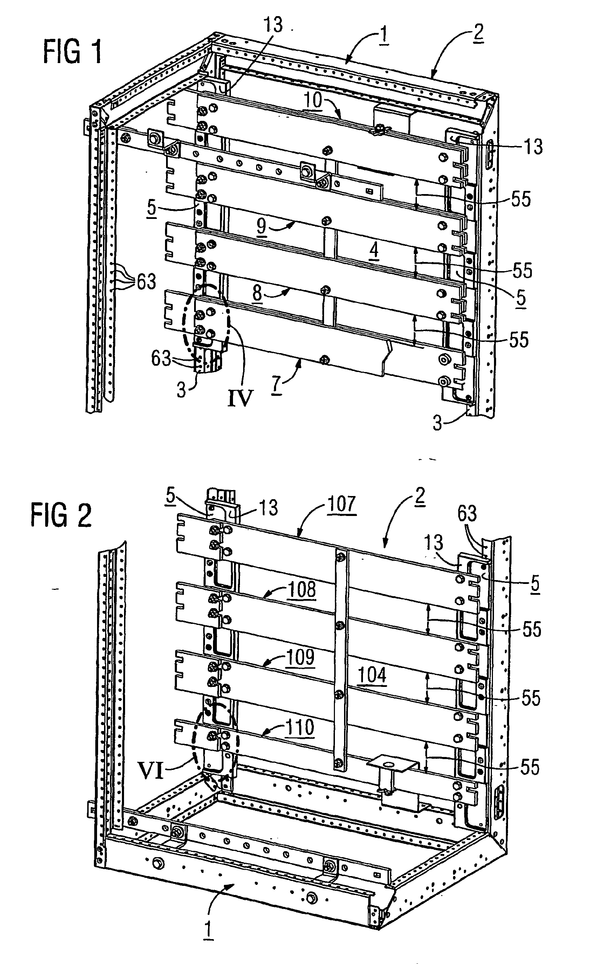

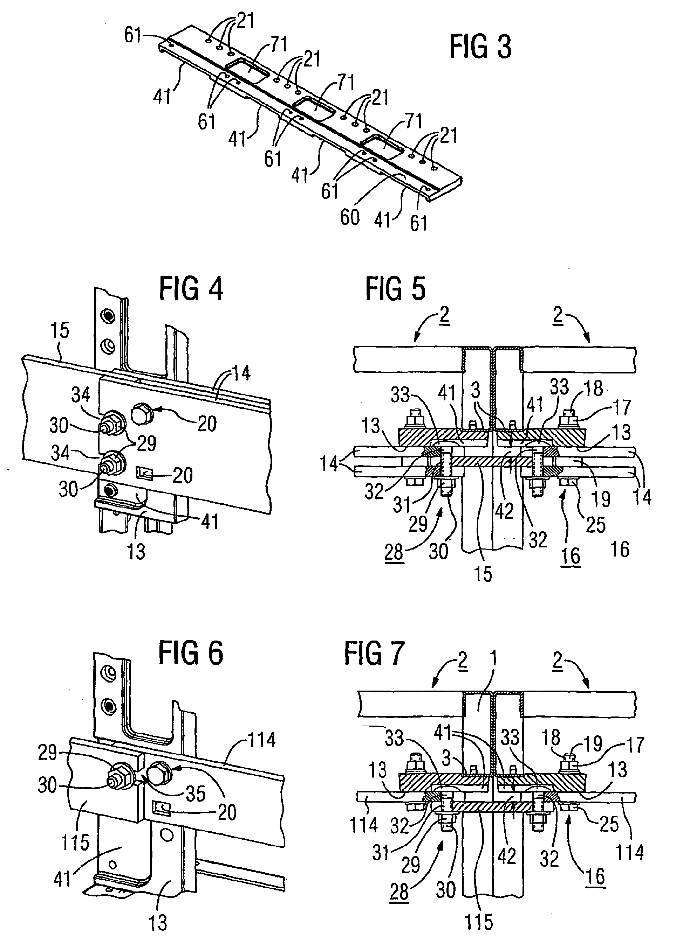

In den Figuren 1, 2 und 8 ist das Gerüst 1 eines Schaltfeldes 2 einer Schaltanlage gezeigt. Mehrere derartige Schaltfelder 2 können gemäß der Figuren 5, 7 und 10 nebeneinander angeordnet und miteinander verbunden werden. Abgewinkelte Kanten 3 des Gerüstes 2 dienen zur Befestigung von Sammelschienenanordnungen, die sowohl im oberen als auch im unteren Teil des Gerüstes und dabei spiegelsymmetrisch zur Mitte des Gerüstes angeordnet sein können.

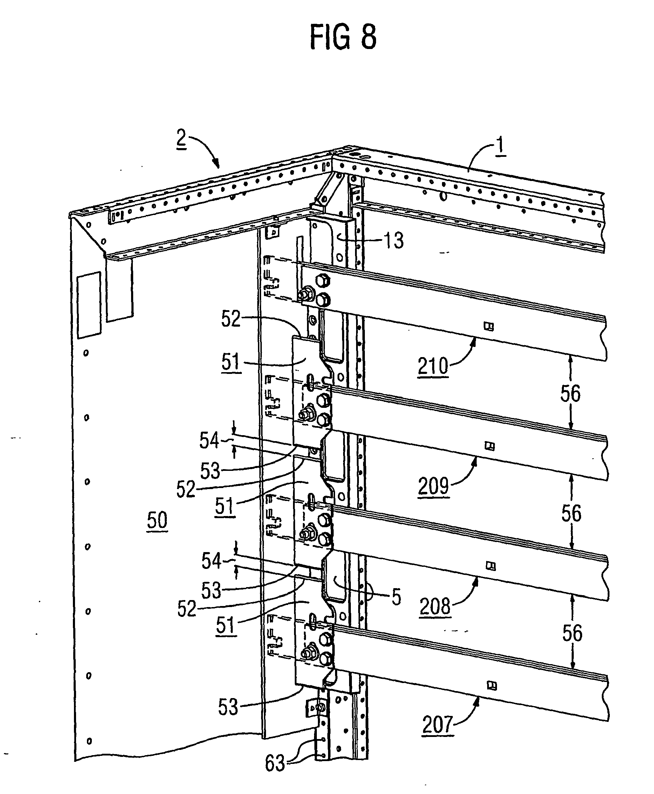

So zeigt die Figur 1 eine erste Ausführungsform 4 der Sammelschienenanordnung, die im oberen Teil des Gerüstes angeordnet ist. Figur 2 zeigt eine zweite Ausführungsform 104 der Sammelschienenanordnung, die im unteren Teil des Gerüstes Angeordnet ist. Eine dritte Ausführungsform der Sammelschienenanordnung 204, die wie die erste Ausführungsform 4 im oberen Teil des Gerüstes angeordnet, ist in Figur 8 gezeigt.

Jede der Ausführungsformen der Sammelschienenanordnung weist jeweils vier parallel zueinander verlaufende Sammelschienen 7, 8, 9, 10; 107, 108, 109, 110; 207, 208, 209, 210 und zwei Sammelschienenhalter 5 auf. Die erste und die zweite Ausführungsform 4; 104 der Sammelschienenanordnung weisen eine erste lichte Weite 55 zwischen den Sammelschienen 7, 8, 9, 10; 107, 108, 109, 110 und die dritte Ausführungsform weist eine von der ersten lichten Weite 55 verschiedene, zweite lichte Weite 56 zwischen den Sammelschienen 207, 208, 209, 210 auf. Eine erste, eine zweite und eine dritte der Sammelschienen 7, 8, 9; 107, 108, 109; 207, 208, 209 sind Phasenleiter, während die vierte der Sammelschienen 10; 110; 210 ein Neutralleiter (N-Leiter ist), der mit dem Gerüst 1 stromleitend verbunden sein kann (PEN-Leiter). Es ist bekannt, dass sich durch das gemeinsame Führen des Neutralleiters mit den Phasenleitern im Falle einer Unsymmetrie im elektrischen Netz, bei der auch der Neutralleiter vom Strom durchflossen wird, ein geringes elektromagnetisches Feld ergibt, so dass nur geringe Arbeitsströme über das Gerüst fließen.

Jede der Sammelschienen weist gemäß der Figuren 1, 2 und 8 zumindest eine an einer Anlagefläche 13 des Sammelschienehalters 5 anliegende erste Teil-Schiene 14; 114; 214 und eine zweite Teil-Schiene auf. Die erste Teil-Schiene 15; 115; 215 erstreckt sich im wesentlichen über die gesamte Breite des Schaltfeldes 2. Die zweite Teil-Schiene ist eine Verbindungsschiene, die sich von dem einen Schaltfeld zu einem in den Figur 5, 7 und 10 gezeigten weiteren Schaltfeld erstreckt. Die Enden der ersten Teil-Schienen sind über erste Befestigungsmittel 16 an den Sammelschienenhaltern 5 befestigt. Hierzu sind die ersten Befestigungsmittel 16 als mit Muttern 17 versehene Schrauben 18 ausgebildet, wobei der Schaft 19 der Schrauben 18 erste Ausnehmungen 20, 21 der ersten Teil-Schienen 14; 114; 214 und des Sammelschienenhalters 5 durchgreift. Der Schraubenkopf 25 ist an der von dem Sammelschienenhalter5 abgewandten Seite 26 der ersten Teil-Schienen 14; 114; 214 abgestützt, während die Mutter 17 an der der abgewinkelten Kante des Gerüstes zugewandten Seite 27 des Sammelschienenhalters 5 abgestützt ist. Jede der zweiten Teil-Schienen 15; 115; 215 ist über zweite Befestigungsmittel 28 an der zugeordneten ersten Teil-Schienen 14; 114; 214 befestigt. Hierzu sind die zweiten Befestigungsmittel 28 als mit Muttern 29 versehene Schlossschrauben 30 ausgebildet, deren Schaft 31 das zugeordnete Ende der ersten Teil-Schiene 14; 114; 214 und das zugeordnete Ende der zweiten Teil-Schiene 15; 115; 215 im Bereich zweiter Ausnehmungen 34, 35 durchgreift. Die Mutter 29 ist dabei gemäß der Figuren 1 und 8 bei Verwendung einer weiteren erster Teil-Schienen 14; 114; 214 pro Sammelschiene an der weiteren ersten Teil-Schiene 14; 114; 214 oder bei nur einer ersten Teil-Schiene an der zweiten Teil-Schiene 15; 115; 215 abgestützt. Der Schraubenkopf 31 ist an der an dem Sammelschienenhalter anliegenden ersten Teil-Schiene abgestützt.

Gemäß der Figuren 4 und 5 bzw. 6 und 7 weisen die ersten Ausnehmungen 20 der ersten Teil-Schienen 14; 114; 214 zum Toleranzausgleich einen quadratischen Querschnitt auf, der größer bemessen ist als die an den Außendurchmesser der Schraube 18 angepasste erste Ausnehmung 21 des Sammelschienenhalters 5. Die zweiten Ausnehmungen 34, 35 der ersten 14, 114, 214 und der zweiten Teil-Schienen 15, 115, 215 sind als in Richtung der zugewandten freien Enden offene Langlöcher derart ausgebildet, dass die ersten Teil-Schienen 14; 114; 214 und die zweite Teil-Schiene 15; 115; 215 aus entgegengesetzten Richtungen seitlich auf den Schaft der zugeordneten Schlossschraube 30 aufgeschoben werden können. Der Sammelschienenhalter 5 weist den ersten Teil-Schienen 14; 114; 214 gegenüberliegende, benachbart den Anlageflächen 13 für die Sammelschiene angeordnete, einseitig offene Vertiefungen 41 auf, in denen der Schraubenkopf 33 der Schlossschrauben 30 aufgenommen ist. Durch sie einseitig offene Gestaltung der Vertiefungen 41 kann die Verbindungsschiene mit der Schlossschraube 30 bei am Gerüst befestigtem Sammelschienenhalter 5 durch seitliches Einschieben des Schraubenkopfes 33 in die Vertiefung 41 leicht nachgerüstet werden. Dabei ist die Tiefe 42 der Vertiefungen 41 so bemessen, dass ein Herausrutschen der Schlossschraube 30 aus den zweiten Ausnehmungen 34, 35 sicher verhindert ist. Die Schlossschrauben weisen einen sich an den Schraubenkopf anschließende, als Vierkant 32 ausgebildeten Abschnitt des Schaftes 31 auf, der in dem einem der Langlöcher 34 verdrehsicher gehalten ist. Zum Befestigen der zweiten Teil-Schiene an der ersten Teil-Schiene ist es somit nicht erforderlich das zweite Befestigungsmittel 28 manuell gegen Verlieren oder Verdrehen zu sichern.

Jede der Ausführungsformen 4, 104, 204, 304 der Sammelschienenanordnung kann mit einer Anordnung 50 zum Störlichtbogenschutz versehen werden.

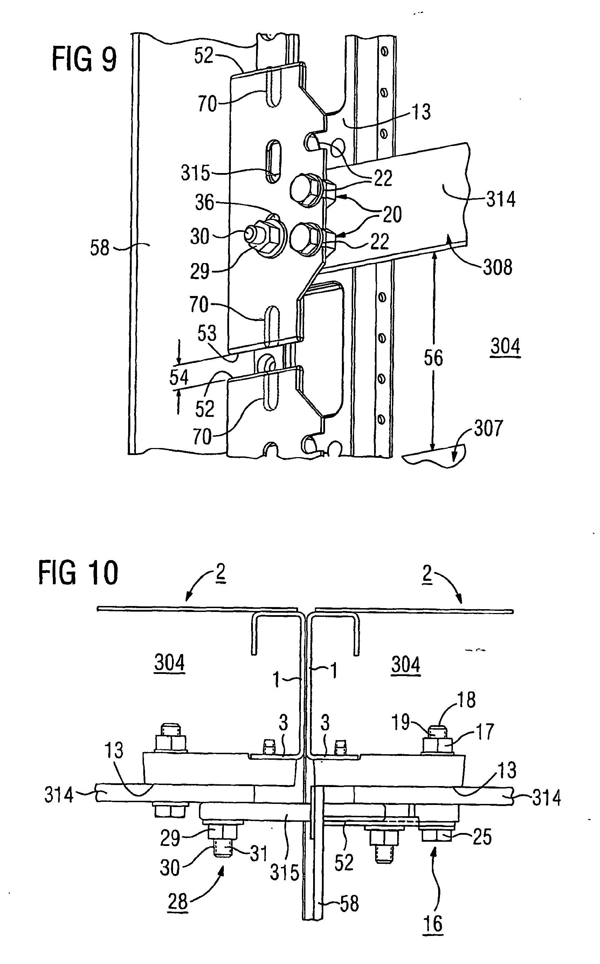

Diese Anordnung 50 weist gemäß der Figur 8 drei Störlichtbogen-Elektroden 51 auf, von-denen jeweils eine mittels der ersten 16 und der zweiten 28 Befestigungsmittel an den drei Phasenleitern befestigt ist. Auch der N-Leiter bzw. PEN-Leiter kann mit einer Störlichtbogen-Elektrode 51 versehen werden. Die Störlichtbogen-Elektroden sind als Metallblechteil aus Stahl ausgebildet, die eine höhere Schmelzwärme gegenüber den aus Kupfer bestehenden Sammelschienen 7, 8, 9, 10; 107, 108, 109, 110; 207, 208, 209, 210 aufweisen. Sie weisen gemäß den Figuren 9 und 10 jeweils eine erste und eine zweite durch Falzen doppellagig gestaltete Kante 52, 53 auf. Diese Störlichtbogen-Elektroden sind so angeordnet, dass sich jeweils zwischen zwei benachbarten Sammelschienen die erste Kante 52 der an der einen Sammelschiene 207; 407 befestigten Störlichtbogenelektrode und die zweite Kante der an der anderen Sammelschiene befestigten Störlichtbogen-Elektrode derart mit einer lichten Weite 54, die größer als die lichte Weite 55, 56 zwischen den Stromschienen ist, gegenüberstehen, dass bei einem Kurzschluss der beiden Stromschienen der entstehende, sich in einer Laufrichtung 57 entlang der Längsachse der Stromschienen fortbewegende Lichtbogen zwischen der ersten 52 und der zweiten Kante 53 brennt. An diesen Kanten findet der Lichtbogen in Verbindung mit einer Isolierwand 58 ideale Brennbedingungen und bleibt dort stehen. Eine weitere Zerstörung der Schaltanlage, insbesondere die Zerstörung eines benachbarten Schaltfeldes sind somit sicher verhindert. Da die lichte Weite 54 zwischen den gegenüberliegenden Kanten 52, 53 der Störlichtbogen-Elektroden 51 kleiner als die lichte Weite 55, 56 zwischen den Sammelschienen ist, findet der Abbrand an den Störlichtbogen-Elektroden statt. Damit ist sichergestellt, dass nach dem Auftreten eines Lichtbogens, insbesondere bei kurzer Brenndauer, die Sammelschienen nicht zerstört und daher nicht ersetzt zu werden brauchen. Die Störlichtbogen-Elektroden sind nur im Falle des Auftretens eines Störlichtbogens vom Strom durchflossen, so dass eine Registrierung des Störlichtbogens - beispielsweise über eine Luftspule und einen Wandler - und eine Auswertung des Störlichtbogens - beispielsweise die Abschaltung der Einspeisung des Stromes - möglich sind.

Zur Führung des Lichtbogens in Richtung der Kanten 52, 53, die parallel zur Mittelachse der Stromschienen verlaufen, können Leitelemente in Form von Materialkanten 70 vorgesehen sein, die in Figur 9 mit gestrichelten Linien dargestellt sind. Die Materialkanten können beispielsweise Kanten von Schlitzen Nuten, Ausprägungen oder zusätzlich aufgebrachten, vorzugsweise scharfkantigen Elementen sein.

Zur Befestigung der Störlichtbogen-Elektroden 51 an den Stromschienen weisen die Störlichtbogen-Elektroden 51 den ersten Ausnehmungen der Stromschienen und des Sammelschienenhalters zugeordnete erste Ausnehmungen 22 und den zweiten Ausnehmungen 34, 35 der Sammelschienen zugeordnete zweite Ausnehmungen 36 auf.

Gemäß der Figur 10 wird ein Weiterlaufen des Lichtbogens auf der Sammelschiene in das benachbarte Schaltfeld zusätzlich dadurch verhindert, dass in der Laufrichtung 57 des Lichtbogens hinter den Störlichtbogen-Elektroden 51 die Isolierwand 58 aus einer Hartmatte angeordnet ist. Diese Hartmatte liegt an den Störlichtbogen-Elektroden an. Durch dieses Anliegen werden zum Einen die durch das Brennen des Lichtbogens entstehenden ionisierten, elektrisch hoch leitenden Gase aufgehalten und abgekühlt. Zum Anderen wird sichergestellt, dass der Lichtbogen an der Sammelschiene nicht neu zünden kann. Da sie zusätzlich die Luftstrecke zu geerdeten Teilen vergrößert, ist auch ein Neuzündungen des Lichtbogens an diesen geerdeten Teilen sicher vermieden. Die Hartmatte trägt auch zur Reduzierung der durch den Abbrand entstehen Verschmutzung im benachbarten Schaltfeld bei.

Gemäß der Figur 3 ist zur Positionierung der Sammelschienenhalter 5 an der jeweiligen abgewinkelten Kante 3 des Gerüstes 1 eine weitere Vertiefung 60 im Bereich dritter Ausnehmungen 61 des Sammelschienenhalters 5 vorgesehen. Die dritten Ausnehmungen 61 wirken mit dritten Befestigungsmitteln 62 zusammenwirken, die zum Befestigen der Sammelschienenhalter 5 an den abgewinkelten Kanten 3 des Gerüstes 1 dienen. Der Abstand der dritten Ausnehmungen 61 ist dabei an das Raster einer Lochung 63 der abgewinkelten Kanten 3 angepasst. Weiterhin sind Materialverjüngungen 71 zur Materialeinsparung vorgesehen.

Gemäß der Figur 3 sind an jedem der Sammelschienenhalter 5 vier mal drei also zwölf erste Ausnehmungen 21 und vier Vertiefungen 41 auf der den Sammelschienen zugewandten Seite vorgesehen. Diese ersten Ausnehmungen 21 und diese Vertiefungen 41 sind in Längsrichtung des Sammelschienenhalters spiegelsymmetrisch derart angeordnet, dass alle Sammelschienenhalter gleich ausgebildet und insbesondere jeder dieser gleich ausgebildeten Sammelschienenhalter sowohl an der linken Seite als auch - und zwar durch Drehung um 180° - an der rechten Seite des Gerüstes 1 angeordnet werden kann.

Die Störlichtbogen-Elektroden 51 sind insgesamt spiegelsymmetrisch und zwar zu einer Ebene, die parallel zu den beiden Kanten 52, 53 und senkrecht zur Flachseite der Sammelschienen verläuft.

Wie ein Vergleich der Figuren 1 bzw. 2 mit der Figur 8 verdeutlicht, sind die Anzahl und der gegenseitige Abstand der Ausnehmungen und der Vertiefungen der Sammelschienen und der Störlichtbogen-Elektroden so gewählt, dass die Sammelschienenhalter die Befestigung von unterschiedlich breiten Sammelschienen und damit die Befestigung von Sammelschienen bei unterschiedlichen lichten Weiten 55, 56 zwischen den Sammelschienen erlauben und dass auch die gleich ausgebildeten Störlichtbogen-Elektroden 51 für den Störlichtbogenschutz der unterschiedlichen Ausführungsformen 4, 104, 204 der Sammelschienenanordnung verwendbar und leicht nachrüstbar sind. Die Sammelschienen-Mittelachsenabstände sind dabei bei allen Ausführungsformen 4, 104, 204, 304 der Sammelschienenanordnung gleich.

## Patentansprüche

1. Anordnung (50) zum Störlichtbogenschutz einer Sammelschienenanordnung (4; 104; 204; 304), die zumindest eine erste und eine zweite Sammelschiene (7, 8; 107, 108; 207, 208; 307; 308) aufweist,
mit zumindest einer an der ersten Sammelschiene (7; 107; 207; 307) befestigten ersten Störlichtbogen-Elektrode (51) und einer an der zweiten Sammelschiene (8; 108; 208; 308) befestigten zweiten Störlichtbogen-Elektrode (51),
wobei eine erste Kante (52) der ersten Störlichtbogen-Elektrode (51) einer zweiten Kante (53) der zweiten Störlichtbogen-Elektrode (51) derart gegenübersteht, dass bei einem Kurzschluss der ersten und der zweiten Stromschiene der entstehende Lichtbogen zwischen der ersten und der zweiten Kante brennt.
**dadurch gekennzeichnet,**
**dass** die lichte Weite (54) zwischen den Kanten der Störlichtbogen-Elektroden kleiner als die lichte Weite (55, 56) zwischen den Sammelschienen (7, 8; 107, 108; 207, 208; 307, 308) ist.

2. Anordnung nach Anspruch 1,
**dadurch gekennzeichnet,**
**dass** in Laufrichtung (57) des Lichtbogens hinter den Störlichtbogen-Elektroden (51) eine Isolierwand (58) angeordnet ist,
wobei die Isolierwand (58) an den Störlichtbogen-Elektroden (51) anliegt.

3. Anordnung nach einem der Ansprüche 1 oder 2,
**dadurch gekennzeichnet,**
**dass** die erste Störlichtbogen-Elektrode (51) im Bereich der ersten Kante (52) und die zweiten Störlichtbogen-Elektrode (51) im Bereich der zweiten Kante (53) insbesondere durch Falzen doppellagig ausgebildet sind.

4. Anordnung nach einem der Ansprüche 1 bis 3,
**dadurch gekennzeichnet,**
**dass** die erste Störlichtbogen-Elektrode (51) im Bereich der ersten Kante (52) und die zweiten Störlichtbogen-Elektrode (51) im Bereich der zweiten Kante (53) mit einem vorzugsweise senkrecht zu der jeweiligen Kante verlaufenden Leitelement (70) für den Lichtbogen versehen sind.

5. Anordnung nach Anspruch 4,
**dadurch gekennzeichnet,**
**dass** das Leitelement (70) als Materialkante ausgebildet ist.

6. Anordnung nach einem der Ansprüche 1 bis 5,
**dadurch gekennzeichnet,**
**dass** jede der Störlichtbogen-Elektroden (51) und jede der Sammelschienen, denen sie zugeordnet sind, mit Ausnehmungen (22, 21 sowie 34, 35, 36) zur Befestigung versehen sind.

7. Anordnung nach Anspruch 6,
**dadurch gekennzeichnet,**
**dass** die Ausnehmungen (22, 21 sowie 34, 35, 36)derart ausgebildet sind, dass sie die Befestigung der Störlichtbogen-Elektroden (51) an der ersten und der zweiten Sammelschiene (7, 8; 107, 108; 207, 208; 307, 308) bei unterschiedlichen lichten Weiten (55, 56) zwischen den Sammelschienen erlauben.

## Claims

1. Arrangement (50) for the arc fault protection of a busbar arrangement (4; 104; 204; 304) which has at least one first and one second busbar (7, 8; 107, 108; 207, 208; 307; 308), having at least one first fault arc electrode (51) which is fixed to the first busbar (7; 107; 207; 307) and a second fault arc electrode (51) which is fixed to the second busbar (8; 108; 208; 308), a first edge (52) of the first fault arc electrode (51) being positioned opposite a second edge (53) of the second fault arc electrode (51) such that, in the event of a short circuit between the first and the second busbar, the arc produced burns between the first and the second edge, **characterized in that** the clear width (54) between the edges of the fault arc electrodes is smaller than the clear width (55, 56) between the busbars (7, 8; 107, 108; 207, 208; 307, 308).

2. Arrangement according to Claim 1, **characterized in that** an insulating wall (58) is arranged after the fault arc electrodes (51) in the running direction (57) of the arc, the insulating wall (58) bearing against the fault arc electrodes (51).

3. Arrangement according to either of Claims 1 and 2, **characterized in that** the first fault arc electrode (51), in the region of the first edge (52), and the second fault arc electrode (51), in the region of the second edge (53), are designed to have two layers, in particular by means of folds.

4. Arrangement according to one of Claims 1 to 3, **characterized in that** the first fault arc electrode (51), in the region of the first edge (52), and the second fault arc electrode (51), in the region of the second edge (53), are provided with a guide element (70), which preferably runs perpendicularly with respect to the respective edge, for the arc.

5. Arrangement according to Claim 4, **characterized in that** the guide element (70) is in the form of a material edge.

6. Arrangement according to one of Claims 1 to 5, **characterized in that** each of the fault arc electrodes (51) and each of the busbars, with which they are associated, are provided with cutouts (22, 21 and 34, 35, 36) for fixing purposes.

7. Arrangement according to Claim 6, **characterized in that** the cutouts (22, 21 and 34, 35, 36) are designed such that they allow for the fault arc electrodes (51) to be fixed to the first and the second busbar (7, 8; 107, 108; 207, 208; 307, 308) in the case of different clear widths (55, 56) between the busbars.

## Revendications

1. Dispositif (50) de protection d'un système (4 ; 104 ; 204 ; 304) de barres collectrices contre les arcs électriques parasites, qui a au moins une première et une deuxième barre (7, 8 ; 107, 108 ; 207, 208 ; 307, 308) collectrice,
comprenant au moins une première électrode (51) d'arc électrique parasite fixée à la première barre (7 ; 107 ; 207 ; 307) collectrice et une deuxième électrode (51) d'arc électrique parasite fixée à la deuxième barre (8 ; 108 ; 208 ; 308) collectrice, une première arête (52) de la première électrode (51) d'arc électrique parasite étant en face d'une deuxième arête (53) de la deuxième électrode (51) d'arc électrique parasite, de sorte que, s'il se produit un court-circuit de la première et de la deuxième barre de courant, l'arc électrique créé jaillit entre la première arête et la deuxième arête,
**caractérisé**
**en ce que** la distance (54) entre les arêtes des électrodes d'arc électrique parasite est plus petite que la distance (55, 56) entre les barres (7, 8 ; 107, 108 ; 207, 208 ; 307, 308) collectrices.

2. Dispositif suivant la revendication 1, **caractérisé en ce qu'**il est disposé derrière, dans le sens (57) de jaillissement de l'arc électrique de l'électrode (51) d'arc électrique parasite, une paroi (58) isolante,
la paroi (58) isolante s'appliquant à l'électrode (51) d'arc électrique parasite.

3. Dispositif suivant la revendication 1 ou 2, **caractérisé en ce que** la première électrode (51) d'arc électrique parasite est constituée dans la zone de la première arête (52) et la deuxième électrode (51) d'arc électrique parasite dans la zone de la deuxième arête (53) à double couche, notamment par pliage.

4. Dispositif suivant les revendications 1 à 3, **caractérisé en ce que** la première électrode (51) d'arc électrique parasite est munie dans la zone de la première arête (52) et la deuxième électrode (51) d'arc électrique parasite est munie dans la zone de la deuxième arête (53) d'un élément (70) de conduite de l'arc électrique s'étendant de préférence perpendiculairement à l'arête respective.

5. Dispositif suivant la revendication 4, **caractérisé en ce que** l'élément (70) de conduite est constitué sous la forme d'une arête de matière.

6. Dispositif suivant l'une des revendications 1 à 5, **caractérisé en ce que** chacune des électrodes (51) d'arc électrique parasite et chacune des barres collectrices auxquelles elles sont associées sont munies d'évidements (22, 21 ainsi que 34, 35, 36) pour la fixation.

7. Dispositif suivant la revendication 6, **caractérisé en ce que** les évidements (22, 21 ainsi que 34, 35, 36) sont constitués de manière à permettre la fixation de l'électrode (51) d'arc électrique parasite sur la première et la deuxième barre (7, 8 ; 107, 108 ; 207, 208 ; 307, 308) collectrice pour des distances (55, 56) différentes entre les barres collectrices.
